# EUROPÄISCHE PATENTANMELDUNG

(11) **EP 0 795 383 A1**
(43) Veröffentlichungstag der Anmeldung: **17.09.1997**
(21) Anmeldenummer: 97102476.5
(22) Anmeldetag: 15.02.1997
(51) Int. Cl.: B26F 1/00, B23D 45/12

(54) **Verfahren und Vorrichtung zum Schneiden von Schlitzen in Rohre aus Kunstoff**

(30) Priorität: 13.03.1996 DE 19609693
(71) Anmelder: Hegler, Ralph Peter, Dr.-Ing., 97688 Bad Kissingen (DE)
(72) Erfinder: Hegler, Ralph Peter, Dr.-Ing., 97688 Bad Kissingen (DE)
(74) Vertreter: Rau, Manfred, Dr. Dipl.-Ing.

(57) **Zusammenfassung**

Zum Schneiden von Schlitzen (48) in ein Rohr (4) aus Kunststoff mit gewelltem Profil werden rotierend angetriebene Schneidmesser (36) mit hakenförmig gekrümmten Schneidflächen (44) eingesetzt, die Späne (55, 58) relativ großer Dicke (c) schneiden. Hiermit werden Schlitze (48) auch in Wände (49) mit einer Dicke (d) ≥ 2,0 mm geschnitten.

## Beschreibung

Die Erfindung betrifft ein Verfahren und eine Vorrichtung zum Schneiden von Schlitzen in Rohre aus Kunststoff mit einem gewellten Profil.

Aus der EP 0 085 770 B1 (entsprechend US-Patent 4 488 467) ist eine Vorrichtung zum Schneiden von Schlitzen in Rohre aus Kunststoff bekannt. Diese Vorrichtung weist mindestens einen Messerkopf mit mindestens einem Messer auf, der durch ein Planetengetriebe zwangsangetrieben sich zumindest teilweise am Umfang des Rohres abwälzt. Die Schneide des Messers läuft in einer Epitrochoide um das Rohr um. Der Messerkopf ist mit schraubenförmig verlaufenden Stegen versehen, wobei ein Messer parallel hierzu angeordnet ist. Dieses sogenannte Planetenschlitzverfahren ist bei Rohren mit Durchmessern kleiner 250 mm von erheblichem Vorteil.

Aus der EP 0 013 626 B1 ist ein dem vorstehend geschilderten Verfahren sehr ähnliches Verfahren bekannt.

Aus der EP 0 644 008 A1 (entsprechend US Ser. No. 08/308 592) ist es bekannt, mittels radial zur Rohrachse zugestellter hochtourig angetriebener Kreissägescheiben Schlitze in die Wand im Bereich einer Vertiefung des gewellten Rohres zu sägen. Diese Technik ist bei großen Nennweiten der Rohre, und bar solchen über 200 mm, kostengünstig.

In der Praxis hat sich gezeigt, daß die vorstehend geschilderten Verfahren und Vorrichtungen zum Erzeugen von Schlitzen in Well-, Rippen- und Verbundrohren großer Nennweiten zahlreiche Nachteile aufweisen. Vielfach ist es aus dräntechnischen Gründen erforderlich, daß die Schlitze eine Breite von nicht mehr als 0,8 bis 2,0 mm aufweisen, damit möglichst wenig fremde Partikel in die Rohre eindringen. Trotzdem ist eine bestimmte Wasserein- oder Wasseraustrittsfläche über die Rohrlänge erforderlich, damit die Funktion als Drän-/Sicker- oder Versickerrohr überhaupt erfüllt wird.

Bei den beiden eingangs genannten Verfahren bzw. Vorrichtungen ist es nur möglich, Schlitze mit einer Breite einzuschneiden, die etwa der Dicke der Wand entsprechen, in die der Schlitz eingeschnitten wird, da andernfalls die Gefahr des Brechens der Messer gegeben ist. Bei einer Dicke der Wand über 2,0 mm werden dabei die Schnittkräfte so groß, daß das Schneiden insgesamt nicht mehr zuverlässig und kostengünstig durchführbar ist.

Das letztgenannte Verfahren einschließlich der Vorrichtung ermöglicht es zwar, auch in Well-, Rippen- und Verbundrohre großen Durchmessers und entsprechend großer Dicke der Wand Schlitze einzufräsen bzw. einzusägen. Nachteilig ist hierbei aber eine hohe Geräuschentwicklung und die Feinheit der erzeugten Späne, deren Dicke unter 0,1 mm liegt. Diese Späne kommen in einem beträchtlichen Umfang in das Rohr und sind dort wegen der elektrostatischen Aufladung nur schwer zu entfernen. Außerdem führt die elektrostatische Aufladung der Späne zu einer starken Verschmutzung der Säge. Darüber hinaus können die Späne wegen ihres staubähnlichen Charakters nicht mehr wiederverwertet werden.

Der Erfindung liegt daher die Aufgabe zugrunde, für Well-, Verbund- oder Rippenrohre großen Durchmessers und entsprechend großer Dicke der Wand ein Verfahren und eine Vorrichtung anzugeben, womit Schlitze störungsfrei geschnitten werden können.

Diese Aufgabe wird durch ein Verfahren mit den Merkmalen des Anspruches 1 gelöst. Die erzeugten Späne haben bezogen auf ihr Volumen eine kleine Oberfläche, so daß auch eine eventuell vorhandene elektrostatische Aufladung an der Oberfläche nicht dazu führt, daß die Späne am Schneidwerkzeug oder am Rohr haften bleiben. Dadurch daß die Schlitze durch Schneiden von Spänen erzeugt werden, können auch theoretisch Späne kaum in das Rohr hineinfallen, und zwar auch dann nicht, wenn eine den Schlitz bildende Durchbrechung bereits teilweise erzeugt ist. Insbesondere die Maßnahmen nach Anspruch 2 verhindern, daß auch dann noch Späne in das Rohr hineinfallen können. Die Späne haben eine solche Größe, daß ihre Wiederverwendung möglich ist. Das Schneiden der Schlitze erfolgt geräuscharm. Die Breite der Schlitze kann beliebig gemacht werden. Das Verfahren kann für jeden gängigen Kunststoff eingesetzt werden.

Die Aufgabe wird weiterhin durch eine Vorrichtung mit den Merkmalen des Anspruches 4 gelöst.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: einen vertikalen Längsschnitt durch eine Vorrichtung zum Schneiden von Schlitzen in Well- oder Verbundrohre,
- Fig. 2: eine schematische Teil-Darstellung der Vorrichtung entsprechend einem Querschnitt durch Fig. 1,
- Fig. 3: eine Teil-Darstellung einer Schneidvorrichtung in einem Teilschnitt nach der Schnittlinie III-III in Fig. 4,
- Fig. 4: eine Stirnansicht der Schneidvorrichtung gemäß dem Sichtpfeil IV in Fig. 3,
- Fig. 5: eine Teilansicht der Schneidvorrichtung zu Beginn des Schneidens eines Schlitzes,
- Fig. 6: einen Schnitt durch Fig. 5 entsprechend der Schnittlinie VI-VI in Fig. 5 und
- Fig. 7: eine Darstellung entsprechend Fig. 5 am Ende des Schneidens eines Schlitzes.

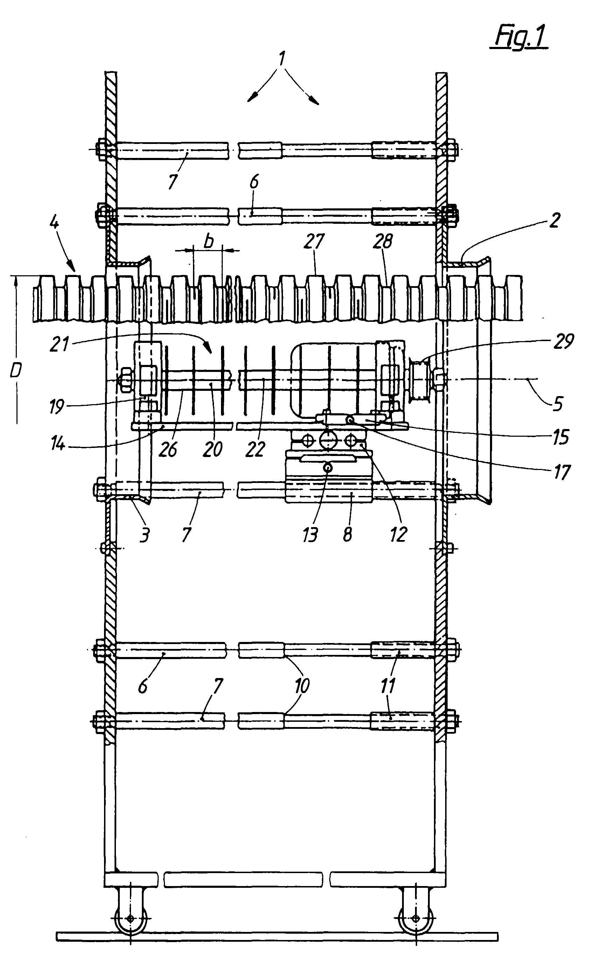

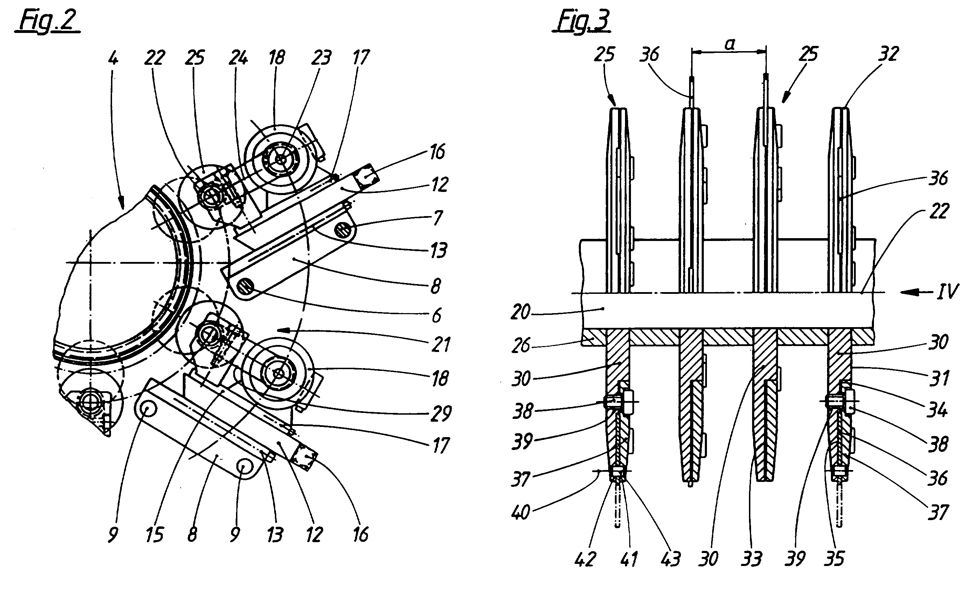

Die in den Fig. 1 und 2 dargestellte Vorrichtung zum Schneiden von Schlitzen in Well- oder Verbundrohre aus Kunststoff weist ein Gestell 1 auf, das mit Führungen 2, 3 für ein Rohr versehen ist, in das Schlitze geschnitten werden sollen. Einrichtungen zum Zentrieren und Halten und Transportieren des Rohres 4 sind nicht dargestellt. Sie können ausgestaltet sein, wie in der EP 0 644 008 A1 (entsprechend US Ser. No. 08/308 592) dargestellt und beschrieben ist. Am Gestell 1 sind parallel zur Mittel-Längs-Achse 5 der miteinander fluchtenden Führungen 2, 3 jeweils paarweise Haltestangen 6, 7 angebracht, auf denen jeweils ein Träger 8 für eine Schneideinrichtung angebracht ist. Er weist jeweils zwei zueinander parallele Befestigungslöcher 9 auf, durch die Haltestangen 6, 7 hindurchgesteckt werden, wobei der jeweilige Träger 8 einseitig gegen Anschlagbunde 10 auf den Haltestangen 6, 7 anliegt. Auf der anderen Seite sind jeweils Distanzhülsen 11 vorgesehen, die wiederum gegen das Gestell 1 anliegen.

Auf dem Träger 8 ist eine Schlittenführung 12 linear verschiebbar angebracht, die mittels einer Spindel 13 verschiebbar ist, und zwar zwischen einer - bezogen auf die Achse 5 - äußeren und einer inneren und jeder beliebigen dazwischenliegenden Position. Auf dieser Schlittenführung 12 ist ein eine Montageplatte 14 tragender Schlitten 15 verschiebbar geführt, der mittels eines Positionier-Motors 16, beispielsweise eines Schrittmotors, antreibbar ist. Auf dem Schlitten 15 wiederum ist mittels einer Spindel 17 um eine kurze Einstellwegstrecke verschiebbar ein Messer-Antriebsmotor 18 angeordnet. Weiterhin sind auf diesem Schlitten 15 Lagerböcke 19 für eine Welle 20 der Schneideinrichtung 21 angebracht. Diese Lagerböcke 19 sind gegenüber dem Schlitten 15 nicht einstellbar. Die Achse 22 der Welle 20 und die Achse 23 des Antriebsmotors 18 liegen jeweils in einer gemeinsamen Radialebene 24 mit der Achse 5 und verlaufen parallel zu dieser. Die Verschiebung des Schlittens 15 mittels des Positionier-Motors 16 und auch die Einstellbewegungen mittels der Spindeln 13, 17 erfolgen parallel zu dieser Radialebene 24.

Auf der Welle 20 sind scheibenförmige Messerköpfe 25 befestigt, die mittels Distanzhülsen 26 in einem Abstand a zueinander angeordnet sind, der identisch der Teilung b von ringförmigen Erhebungen 27 bzw. ringförmigen Vertiefungen 28 des Rohres 4 ist. Der Antrieb der Welle 20 der Schneideinrichtung 21 erfolgt vom Antriebsmotor 18 mittels eines Riemenantriebs 29.

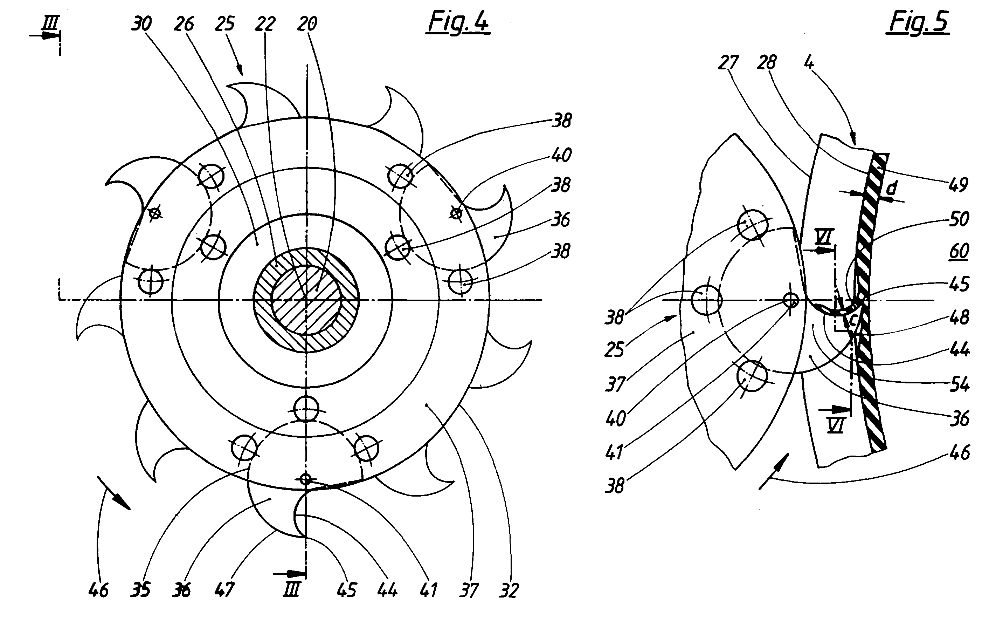

Aus den Fig. 3 und 4 ergibt sich der Aufbau der Messerköpfe 25 und ihre Anordnung auf der Welle 20. Jeder Messerkopf 25 weist eine ringförmige Basisscheibe 30 auf, die auf der Welle 20 festgelegt ist, wobei benachbarte Basisscheiben 30 mittels der Distanzhülsen 26 im Abstand a voneinander gehalten werden. Jede Basisscheibe 30 ist an einer Stirnseite 31 mit einer ringförmigen, sich bis zum Außenumfang 32 erstreckenden Ausnehmung 33 versehen. In die der Stirnseite 31 zugewandte Stirnfläche 34 dieser Ausnehmung 33 sind teilkreisförmige Vertiefungen 35 eingearbeitet, in die teilkreisförmige, flache, scheibenförmige Schneidmesser 36 mit gleichem Außenumfang einlegbar sind. In die Ausnehmung 33 ist ein Haltering 37 einlegbar, der mittels Schrauben 38 an der Basisscheibe 30 befestigbar ist, die in entsprechende Gewindebohrungen 39 in der Basisscheibe 30 schraubbar sind. Die Schneidmesser 36 weisen - fluchtend mit ihrer jeweiligen Achse 40 - Zentrierzapfen 41 auf, die in entsprechende miteinander fluchtende Zentrierbohrungen 42, 43 in der Basisscheibe 30 und dem Haltering 37 eingreifen. Es sind jeweils drei Schrauben 38 benachbart zum Umfang eines Schneidmessers 36 vorgesehen, so daß der Haltering 37 benachbart zu den Schneidmessern 36 jeweils besonders fest angezogen wird. Schneidmesser 36 werden also zwischen der Vertiefung 35 in der Stirnfläche 34 der Ausnehmung 33 und dem Haltering 37 flächig kraftschlüssig gehalten.

Die Schneidmesser 36 weisen jeweils eine radial zur Achse 22 über den Außenumfang 32 der Basisscheibe 30 vorstehende, hakenförmig gebogene Schneidfläche 44 auf, die in einer Schneid-Spitze 45 endet, die - bezogen auf die Drehrichtung 46 des Messerkopfes 25 - voreilt. Diese Schneid-Spitzen 45 sind am teilkreisförmigen Außenrand 47 der Schneidmesser 36 ausgebildet. Die Messerköpfe 25 können auch einteilig als Scheibe, also nach Art eines Sägeblatts ausgebildet werden, wobei dann am Außenumfang die hakenförmig gebogenen Schneidflächen 44 mit Schneid-Spitzen 45 ausgebildet sind. In der Draufsicht würden sich derartige einteilige Messerköpfe 25 nicht oder nur in unwichtigen Einzelheiten von dem geschilderten Messerkopf 25 unterscheiden.

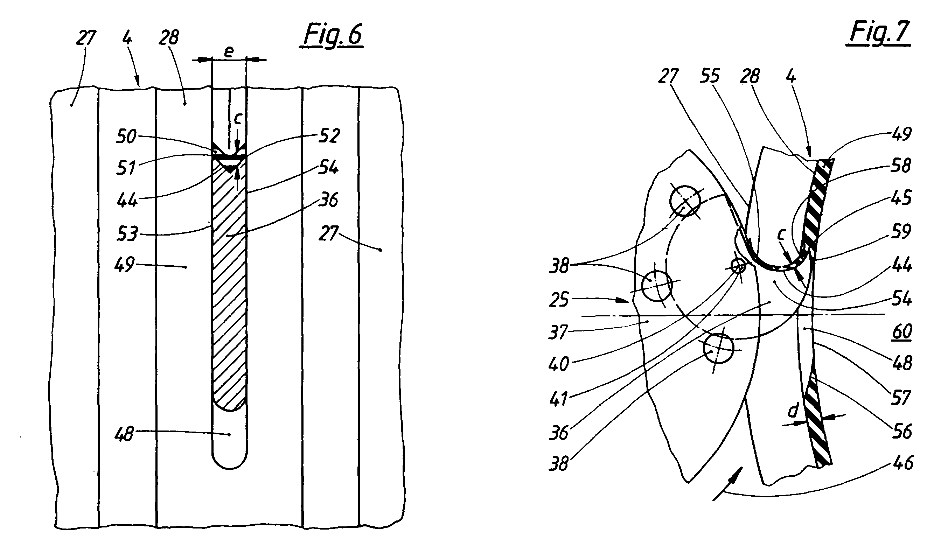

Das Schneiden eines Schlitzes 48 in die Wand 49 des Rohres 4 im Bereich seiner ringförmigen Vertiefung 28 ergibt sich aus den Fig. 5 bis 7. In jede Vertiefung 28, in deren Wand 49 ein oder mehrere Schlitze 48 geschnitten werden sollen, taucht ein Messerkopf 25 ein. In Fig. 5 ist erkennbar, daß ein durchgehender Span 50 mit einer mittleren Dicke c aus der Wand 49 geschnitten wird, wobei gilt c ≥ 0,2 mm. Für die Dicke d der Wand 49 gilt d ≥ 2,0 mm. Für den Durchmesser D des Rohres 4 gilt D ≥ 200 mm. Dieser Span 50 ist insgesamt noch einstückig, da die Wand 49 des Rohres 4 noch nicht durchbrochen ist, also noch kein Schlitz 48 gebildet ist. Aus Fig. 6 ist erkennbar, daß dieser Span 50 in der Schneidfläche 44 geführt ist, die durch zwei seitliche Schneidkanten 51, 52 begrenzt ist, die zwischen der jeweiligen Schneidfläche 44 und den Seitenflächen 53, 54 der scheibenförmigen Schneidmesser 36 ausgebildet sind. Außer den Schneidkanten 51, 52 hat naturgemäß auch die Schneid-Spitze 45 Schneidfunktionen. Wie Fig. 6 weiterhin entnehmbar ist, verläuft die Schneidfläche 44 zwischen den Schneidkanten 51, 52 keilförmig, und zwar zur Achse 40 hin eingezogen bzw. ausgekehlt, so daß ein Span 50 in Richtung der Achse 40, also zwischen den Seitenflächen 53, 54 geführt wird. Er läuft also beim Schneiden entsprechend Fig. 5 nicht in Richtung einer der Seitenflächen 53, 54 aus der Schneidfläche 44 heraus. Dies gilt auch dann, wenn entsprechend der Darstellung in Fig. 7 die Wand 49 des Rohres 4 bereits durchbrochen ist, also schon ein Schlitz 48 vorhanden ist. In diesem Fall wird beim Eintauchen der Spitze 45 eines Schneidmessers 36 von außen in die Wand 49 ein erster Span 55 geschnitten, der in der keilförmigen Schneidfläche 44 verbleibt. Nach dem Schneiden dieses ersten Spanes 55 an einem ersten Schlitzende 56 durchläuft das Schneidmesser 36 den bereits vorhandenen Schlitzgrund 57 und taucht dann von der Innenseite der Wand 49 her wieder in die Wand 49 ein, wobei ein zweiter Span 58 am zweiten Schlitzende 59 geschnitten wird. Dieser Span 58 schiebt den Span 55 in der Schneidfläche 44 weiter. Der Span 55 wird dann aus der Schneidfläche 44 ausgeworfen. Auch hierbei fällt kein Span 55, 58 in das Innere 60 des Rohres 4. Durch die hakenförmige Gestaltung der Schneidfläche 44 wird als eine radial zur Achse 5 nach außen gerichtete Kraft auf die Späne 50, 55, 58 ausgeübt.

Die Späne 50, 55, 58 haben eine Breite e, für die im Verhältnis zur Dicke d der Wand 49 des Rohres 4 im Bereich seiner Vertiefung 28 gilt e/d ≤ 1,2. Die Breite der Späne 50, 55, 58 entspricht der Breite der als Wassereintrittsöffnungen dienenden Schlitze 48. Außerdem gilt als Obergrenze für die mittlere Dicke c der Späne 50, 55, 58 insgesamt 0,2 mm ≤ c ≤ 1,2 e.

Die Zustellung der ständig angetriebenen Messerköpfe 25 erfolgt mittels der Positionier-Motoren 16 im Schnellgang bis zum Eintauchen jeweils eines Messerkopfes 25 in eine ringförmige Vertiefung 28 des Rohres 4. Unmittelbar bevor die Schneidmesser 36 die Wand 49 erreichen, wird auf langsamen Schneid-Vorschub umgeschaltet und von jedem Messerkopf 25 ein Schlitz 48 in die Wand 49 geschnitten, wobei hierbei mit einem relativ großen Vorschub gefahren wird, der der Dicke c der Späne 50, 55, 58 entspricht. Die Messerköpfe 25 werden hierbei mit einer hohen Drehzahl von beispielsweise 2000 min⁻¹ angetrieben. Damit beim Schneiden der Schlitze 48 keine Drehmomente auf das Rohr 4 ausgeübt werden, werden die Wellen 20 der um das Rohr 4 herum angeordneten Schneideinrichtungen 21 jeweils abwechselnd gegensinnig angetrieben.

## Patentansprüche

1. Verfahren zum Schneiden von Schlitzen (48) in ein Rohr (4) aus Kunststoff mit gewelltem Profil, mit folgenden Schritten:
- Einsatz eines Rohres (4), das
-- eine Mittel-Längs-Achse (5),
-- jeweils in gleichbleibenden Abständen (Teilung b) radial zur Achse (5) angeordnete, ringförmige Erhebungen (27),
-- jeweils in gleichbleibenden Abständen (Teilung b) zwischen zwei benachbarten Erhebungen (27) radial zur Achse (5) angeordnete, ringförmige Vertiefungen (28) und
-- in jeder Vertiefung (28) eine Wand (49) mit einer Dicke d ≥ 2,0 mm aufweist; und
- Schneiden von Spänen (50, 55, 58) aus der Wand (49) zur Erzeugung von Schlitzen (48) in der Wand (49), wobei
-- die Späne (50, 55, 58) eine Breite (e) aufweisen und
-- die Späne (50, 55, 58) eine mittlere Dicke (c) aufweisen, wobei gilt 0,2 mm ≤ c ≤ 1,2 e.

2. Verfahren nach Anspruch 1, wobei auf die Späne (50, 55, 58) eine radial zur Achse (5) des Rohres (4) nach außen gerichtete Kraft ausgeübt wird.

3. Verfahren nach Anspruch 1 oder 2, wobei für das Verhältnis der Breite (e) der Späne (50, 55, 58) zur Dicke (d) der Wand (49) gilt: e/d ≤ 1,2.

4. Vorrichtung zur Durchführung des Verfahrens nach einem der Ansprüche 1 bis 3, mit folgenden Merkmalen:
- ein Gestell (1);
- Führungen (2, 3) für ein Rohr (4);
- eine Schneideinrichtung (21), die
-- zu dem Rohr (4) hin und von diesem weg bewegbar ist und
-- in einer Drehrichtung (46) drehantreibbare Messerköpfe (25) mit Schneidmessern (36) aufweist, die
--- mit hakenförmigen Schneidflächen (44) versehen sind, die in in Drehrichtung (46) voreilenden Schneid-Spitzen (45) enden.

5. Vorrichtung nach Anspruch 4, wobei die Schneidmesser (36) scheibenförmig ausgebildet sind.

6. Vorrichtung nach Anspruch 4 oder 5, wobei jede Schneidfläche (44) durch Schneidkanten (51, 52) begrenzt wird.

7. Vorrichtung nach Anspruch 6, wobei jede Schneidfläche (44) zwischen den Schneidkanten (51, 52) ausgekehlt ist.
